(19) **Europäisches Patentamt**

**European Patent Office**

**Office européen des brevets**

(11) **EP 1 176 736 B1**

(12) **EUROPEAN PATENT SPECIFICATION**

(45) Date of publication and mention
of the grant of the patent:
**12.10.2005 Bulletin 2005/41**

(51) Int Cl.⁷: **H04B 7/08**

(21) Application number: **01117255.8**

(22) Date of filing: **17.07.2001**

(54) **Method to automate the preliminary equalization of combined signals in space diversity radio receivers**

Verfahren zur Automatisierung der zusätzlichen Entzerrung von kombinierten Signalen in Raumdiversität Funkempfänger

Procédé pour l'automatisation de l'équalisation préliminaire de signaux combinés dans des récepteurs radio avec diversité spatialle

(84) Designated Contracting States:
**AT BE CH CY DE DK ES FI FR GB GR IE IT LI LU MC NL PT SE TR**

(30) Priority: **28.07.2000 IT MI001746**

(43) Date of publication of application:
**30.01.2002 Bulletin 2002/05**

(73) Proprietor: **Siemens Mobile Communications S.p.A.**
**20126 Milano (IT)**

(72) Inventors:
• **Dal Lago, Antonella**
**20067 Paullo (MI) (IT)**
• **Dell'Orto, Andrea**
**23875 Osnago (LC) (IT)**
• **Fumagalli, Sergio**
**20052 Monza (MI) (IT)**
• **Sampietro, Luigi**
**22063 Cantu (CO) (IT)**

(74) Representative: **Giustini, Delio**
**Siemens Information and Communication Networks S.p.A.**
**Palazzo Gorky**
**Via Monfalcone, 1**
**20092 Cinisello Balsamo (IT)**

(56) References cited:
| EP-A- 0 333 042 | EP-A- 0 889 540 |
| IT-B- 1 298 810 | US-A- 5 581 583 |
| US-A- 5 668 839 | US-A- 6 029 056 |

**Description**

**Field of the invention**

The present invention relates to the field of diversity radio receivers and more precisely to a method to automate the preliminary equalization of combined signals in space diversity radio receivers.

**Background art**

The receiving technique called space diversity, or antenna or trellis diversity, represents a useful countermeasure for adverse propagation conditions of radio signals, particularly those caused by multiple paths. As it is already known, multiple paths for signal can involve destructive interference phenomena (multipath fading) between the signals reaching the same receiving antenna via different paths. Multipath fading is particularly emphasized in the single section of a radio link, especially in the frequency ranges from 4 up to 8 GHz where the spectrum width of the transmitted signal can be compared with the inverse of the period of the cycloid describing the multipath fading phenomenon, according to the mathematical model known as 'three-ray model', or Rummler model, proposed by Bell Laboratories.
A space diversity receiver normally consists of two identical receivers, called Main and Diversity, each one connected to a different receiving antenna, and of a combiner of the two received signals. The distance between the two antennas is such to make the received signals statistically non-correlated. The two receivers are placed on the two homonymous paths of the combiner, which includes a signal adder at whose output a sum signal is present, more immune to the above-mentioned fading thanks to a proper combination strategy. Apart from the peculiar combination strategy adopted, to have the combiner working as expected it is absolutely necessary to perform an initial equalization procedure of the Main and Diversity paths of the signal combiner. By equalization it is meant all the operations necessary in order that the two received signals, in absence of propagation phenomena, have the same amplitude and delay at the adder inputs.
The quantities that have to be equalized before the combination are the amplitude and the relative delay of the two received signals. It resulted from measurements that a 1dB difference between the amplitudes of the two signals at the adder inputs implies a power loss of the combined signal equal to 8%, with a consequent decrease of the signal/noise ratio at the demodulator input and an increase of the BER (Bit Error Ratio). It is also known the criticality of a parameter known as DFM (Dispersive Fade Margin, indicative of the system robustness in respect of amplitude distortion) with respect to the relative delay. Consequently, a correct initial equalization is fundamental to assure the increasingly restrictive quality requirements, provided for by the standards in force. For instance, the ITU-T G.828 recommendation defines for the space diversity receiver placed at the end of a typical 50 Km link a limit of less than 200 seconds per month affected by error (Errored Seconds or ES<200/month).
Up to date, the initial equalization of the two paths of the combiner is manually made by skilled personnel employing for this purpose an expensive dedicated instrumentation. For example, either the amplitude or delay equalization is monitored using a Spectrum Analyser and a driver circuit of the phase shift between the two signals present on the relevant Main and Diversity paths. The best equalization is the one in which the maximum distance between the traces adding the two signals received first in phase and then in phase opposition is obtained. The delay equalization of the preceding method can be automated as described in the Italian patent **IT1298810,** of the name of the same Applicant, titled: "METHOD FOR THE COMPENSATION OF THE STATIC DELAY DIFFERENCE AMONG SIGNALS COMING FROM TWO ANTENNAS FOR SPACE DIVERSITY RECEIVERS EMPLOYING A SIGNAL COMBINER". The method is based on a synchronization loop between a local and a remote modem of the microwave digital radio link providing the use of space diversity receivers. The method provides that the symbol synchronization signal of the modulator and the symbol synchronization signal that the demodulator locally extracts from received data (isochronal among them and to the relevant remote synchronization signals) are brought to a connector placed on the back-plane of the diversity receiver to be equalized. An oscilloscope is connected to the connector, displaying the two waveforms of the synchronization signals using the first signal as trigger of time basis; a microprocessor generates a square wave signal for the control of an electronic switch, alternatively sending to the demodulator the combined signal and one of the two (Main or Diversity) signals present at the adding inputs of the combiner. Two superimposed and reciprocally phase shifted traces, matching the trace displaying the symbol synchronization signal of the demodulator, are thus visible on the monitor. The operator proceeds by attempts to introduce variations in the delay of the signal present on the Diversity path until the perfect phase alignment of the two traces does not indicate that equalization is reached.
**US-A-6029056** discloses a space diversity receiver apparatus for receiving signals by two spatially separated antennas, controlling phase of the signal received by one of the antennas, combining the phase-controlled signal and the signal received by the other antenna and outputting the combined signal, comprising: digital detecting means for digitally detecting center frequency level and levels on high- and low-frequency sides of the center frequency of the combined signal; and phase control means for controlling the phase in such a manner that the center frequency level will coincide with a set level and a deviation between the levels on the high- and low-frequency sides of the center frequency will become zero. The above mentioned means operate according to an endless procedure typically valid after installation. Nevertheless, such suggestions are also given of how to achieve both the initial amplitude and delay equalization. Accordingly, two amplitude equalizers placed downstream respective AGC IF amplifiers of the two diversity branches, and a short delay line of appropriate length, are provided. The initial amplitude equalization is obtained providing suitable control voltages so as to flatten the frequency characteristic of each receiving antenna (in accordance with the known minimum amplitude deviation method) in a state in which the other antenna output has been made zero. The initial delay equalization can be obtained by successive attempts to insert along the shortest branch ever more precise lengths of the delay line, monitoring the progress on the display of the oscilloscope in the meanwhile

A drawback common to all the preliminary equalization methods listed above consists in requiring the use of instrumentation and personnel in the local station. A second drawback is that they set a time limit to the duration of the equalization procedure, which must be completed within a limited time in order to prevent that possible irregular propagation phenomena during equalization impair the good result of operations in progress. A third drawback is caused by the need to transfer cumbersome instrumentation to the stations.

**Object of the invention**

Therefore, scope of the present invention is to overcome the above-mentioned drawbacks and indicate a preliminary equalization procedure of signals on the two paths of the combiners in space diversity radio receivers, capable of completely automating the equalization operations.

**Summary of the invention**

To attain this object, scope of the present invention is a preliminary equalization method of signals on the two paths of the signal combiners in space diversity radio receivers, as described in claim 1.

As it can be noticed from the terms of claim 1, the method includes a first amplitude alignment step of Main and Diversity signals, and a second step having as target the compensation of the relative delay between the signals along the two paths. The first step is absolutely necessary to the successful result of the second one and it could also be repeated during the completion of the second step, for instance when atmospheric phenomena capable of compromising the received signals occur. In fact, remembering what was said in the introduction, also a moderate amplitude misalignment can compromise the good equalization result, and during the above-mentioned atmospheric phenomena no doubt amplitudes are misaligned. Therefore according to the present invention the equalization procedure provides that both during the first and the second step of its development, the different quantities involved are continuously monitored to opportunely detect the progress of irregular propagation phenomena of transmitted signals. The steps of the procedure that takes care of such a task are described in the appended claims.

The second step is based on a routine for the recursive compensation of the delay through the automatic selection of an appropriate combination (number and type) of delay cells of the RIT network. At each new cell combination the routine compares the value of an appropriate target function with the previous value of the same and acts on the controlled quantities aiming at maximizing the equalization degree, in line with the preset accuracy targets.

**Advantages of the invention**

An advantage of the preliminary equalization procedure according to the present invention is that it can automatically be performed by the same processor ordinarily present in diversity receivers. In fact, both the variables to be acquired for the development of the subject procedure and the control signals of the combiner are digitised quantities already foreseen in the normal operation of space diversity receivers. The accuracy and speed of the electronic control enable to operate also in presence of not optimal propagation conditions, reducing the time and cost of installation in comparison to the traditional manual procedures. The equalization data can also be stored in a non-volatile memory, so that, in case of combiner replacement, it is possible to use the same delay values, after amplitude alignment. Then, the operation can be repeated to confirm the results previously obtained. We can conclude saying that thanks to the present invention the only thing an operator has to carry with him is a common laptop PC (with Windows operating system) to launch the procedure and check the relevant result. The procedure subject-matter of the present invention is generally addressed to all types of space diversity receivers.

**Brief description of figures**

The invention, together with further objects and advantages thereof, may be understood from the following detailed description, taken in conjunction with the accompanying drawings, in which:

- **Figure 1** shows the block diagram of a space diversity receiver particularly suitable to support the preliminary equalization procedure according to the present invention;
- **Figure 2** shows a representation of the frequency spectrum of the signal at the input of a filtering block DISP of the receiver of Figure 1;
- **Figure 3** shows an extremely simplified functional representation of the receiver of Figure 1, whose usefulness is to introduce a mathematical and tabular representation of a target function to be maximized according to the procedure of the present invention;
- **Figure 4** shows a graphic representation of the above-mentioned target function valid for the ideal case;
- **Figures 5, 6 and 7** show a flow chart of the procedure of the present invention.

Detailed description of some preferred embodiments of the invention

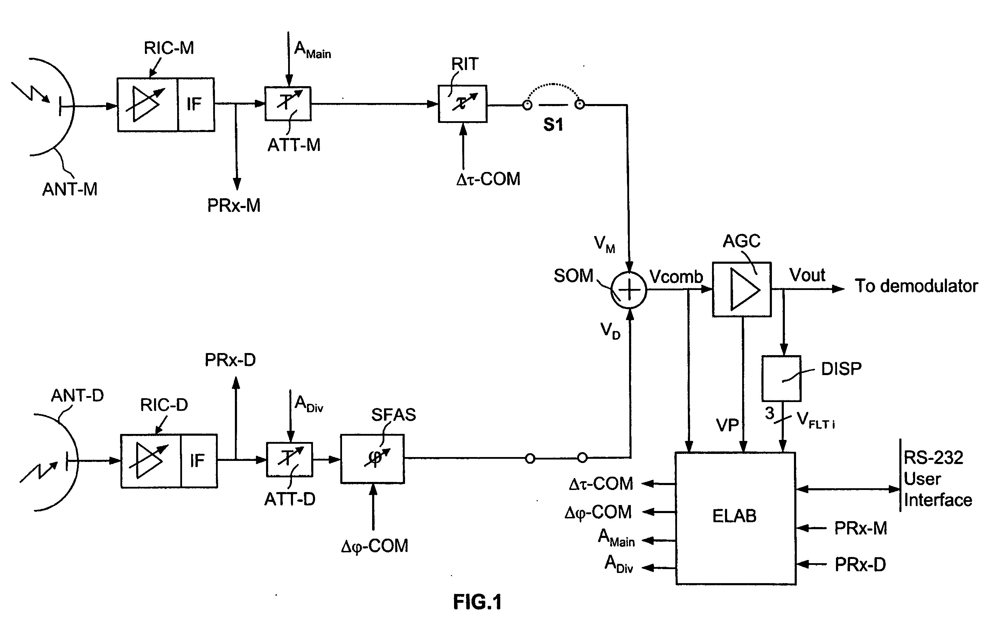

With reference to **Figure 1** it can be noticed a schematisation of a space diversity receiver including two front-end receivers named RIC-M and RIC-D, connected respectively to two antennas ANT-M and ANT-D. In the following, the suffix M indicates the Main path with the relevant blocks and signals, and the suffix D the Diversity path; from implementation point of view, nothing changes if the two suffixes were exchanged. Both radio frequency receivers RIC-M and RIC-D include a conversion stage at intermediate frequency IF. The remaining circuit blocks of **Figure 1,** belong all to the signal combiner and operate at intermediate frequency or, according to the case, in base band. Among these, we can distinguish:

- two electronically controlled variable attenuators ATT-M and ATT-D;
- an electronically controlled variable phase shifter SFAS, placed on the Diversity path, but which could be moved on the Main path with no change for the purposes of the subject procedure;
- a RIT network for the insertion of a variable delay placed on the Main _path_, electronically controlled, in order to insert one or more elementary delay cells whose values allow to set combinations capable of generating variable delays, with steps of 0.5 ns for instance. Nothing would change for the purposes of the subject procedure if the RIT network were moved on the Diversity path;
- a patching point S1 for the possible manual insertion of a due length external coaxial cable, placed on the Main path for convenience of representation but that is actually placed on the shortest path for the received signal; a similar patching point is therefore visible also on the diversity path;
- an adder SOM of Main and Diversity signals $V_M$ and $V_D$ coming from the two paths of the combiner, at whose output a Vcomb combined signal is present;
- an AGC (Automatic Gain Control) amplifier whose input is the Vcomb signal and at which main output there is a combined signal Vout kept to a constant power level before being sent to the demodulator (not visible in Figure 1), and at a secondary output a VP signal is present, that indicates the amount of the amplification made to compensate the flat fading within the band of the modulated signal (this block is not absolutely necessary for the generality of the invention);
- a filtering network DISP receiving the Vout signal and measuring the amount of the power spectral dispersion in the band of the modulated signal due to the selective fading consequent to multiple paths (multipath fading).

The operation of the diversity receiver visible in Figure 1 is controlled by a microprocessor ELAB receiving the following input signals, previously detected and converted to digital:

- two signals PRx-M and PRx-D coming from receivers RIC-M and RIC-D, indicating the power of the respective received signals;
- the Vcomb signal indicating the power of the combined signal;
- the VP signal indicating the flat fading coming from the secondary output of the AGC;
- three $V_{FLTI}$ signals coming from the DISP network indicating the selective fading.

On the basis of received signals, and of the specific operation program, the microprocessor ELAB gives as output the following signals: two signals $A_{Main}$ and $A_{Div}$ for the control of the variable attenuators ATT-M and ATT-D operating on PRx-M and PRx-D signals; a $\Delta\varphi$-COM signal for the control of the phase shifter SFAS; and a $\Delta\tau$-COM signal for the control of the delay network RIT. The microprocessor ELAB controls the diversity receiver and is also connected through an interface RS-232 to a Personal Computer acting as interface towards the operator in charge of the initial equalization and maintenance of the equipment. It must be pointed out how the multiple variables simultaneously controlled by the ELAB block enable to reach a considerable sophistication in the combination strategy, both during normal operation and preliminary tests.

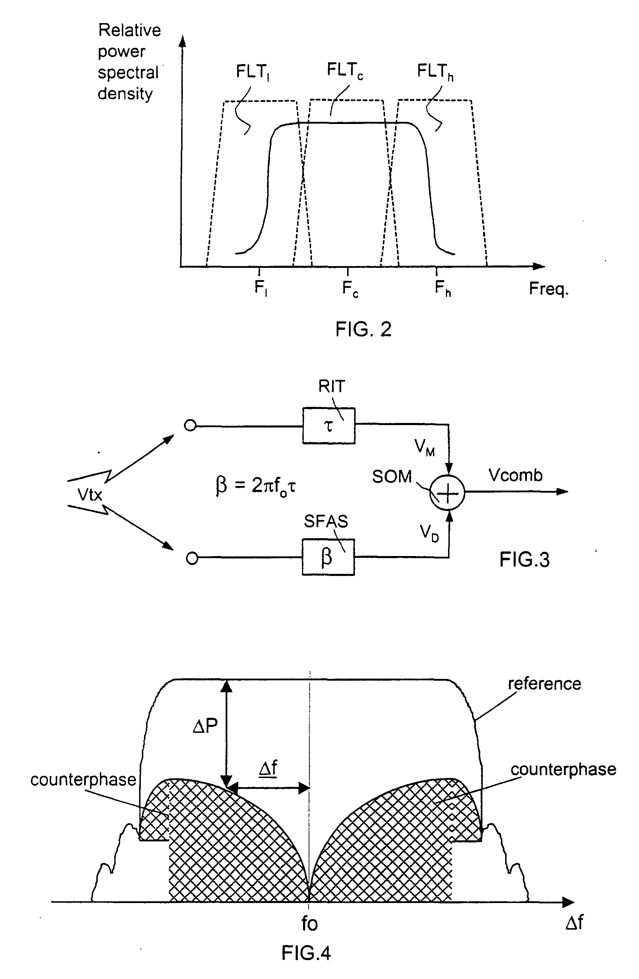

**Figure 2** shows with a dotted line the masks of three bandpass filters $FLT_l$, $FLT_c$, and $FLT_h$ included in the DISP network. The masks are superimposed to the continuous line spectrum of the signal at intermediate frequency Vout at the input of the DISP network and of the demodulator. Each filter has bandwidth of approximately one third of the band of the modulated signal. The filter $FLT_l$ selects the lower part, the filter $FLT_c$ the central part, and the filter $FLT_h$ the upper part of signal bandwidth. The voltage measured at the output of each filter increases as the power in the relevant sub-band increases, therefore it is possible to determine the presence of selective fading (notch) in a sub-band comparing the modules of the differences among the voltage rates coming out from three different possible combinations of filter pairs. In fact, it is sufficient to check that the value of at least one module is different, to be able to assert that we are in presence of a notch. The applicability of the subject method is thus extended to a great part of the known space diversity receivers. The DISP network of **Figure 2** includes the three mentioned filters and the relevant detection and sampling circuits of outgoing voltage, as well as three A/D converters supplying voltage $V_{FLTi}$ to the ELAB block. The latter performs the in pairs comparison for the identification of a notch. The central frequencies and the bandwidth of the three band pass filters $FLT_t$, $FLT_c$, and $FLT_h$ are established on the basis of the following rules and definitions:

- $BW_l$, $BW_c$, $BW_h$: passband of measurement filters of the dispersion $FLT_l$, $FLT_c$, and $FLT_h$ (respectively: lower filter, central filter, upper filter);
- $F_l$, $F_c$, $F_h$: centreband frequencies of filters $FLT_l$, $FLT_c$, and $FLT_h$;
- Bs: band of the modulated signal;
- fo: central frequency of the spectrum of the modulated signal.

The rules for the dimensioning of the filters of the dispersion detector can be summarized as follows:

- $BW_l + BW_c + BW_h > Bs$
- $F_l \leq F_c - BW_l/2$ and $F_h \geq F_c + BW_c/2$
- $F_c$ = fo; $F_l$ and $F_h$ symmetric versus fo.

In the system for which the subject procedure has been developed we have, for instance:

- $F_c$ = 70 MHz $\pm$ (3.5 ÷ 4) MHz;
- $F_l$ = 62 MHz $\pm$ (3.5 ÷ 4) MHz;
- $F_h$ = 78 MHz $\pm$ (3.5 ÷ 4) MHz;
- $BW_l = BW_c = BW_h < 7 \div 8$ MHz in points at -1dB;

while the band of the combined signal in -3dB points, is as follows :

- 128 TCM: minimum frequency at -3dB≈58MHz; maximum frequency at-3dB≈82MHz (fo=70 MHz, Bs at -3dB<24 MHz).
- 64 TCM minimum frequency at -3dB≈56 MHz; maximum frequency at -3dB≈84 MHz (fo = 70MHz, Bs at -3dB<28 MHz).

Before describing the flow chart showing the subject method, it is necessary to understand the presuppositions on which the first equalization method mentioned in the introduction was based. Based on that method, maintaining the amplitude of the Main and Diversity signals constant and driving opportune phase shifting steps between said signals, the best equalization of the delay was that one giving the maximum distance between the traces appearing on the screen of a Spectrum Analyser when two signals received were added first in phase and then in phase opposition. It is obvious that in order to set an automatic equalization procedure, that is, a procedure that intends to overcome the intervention of the operator, it is necessary to give a mathematical basis to the observation of the maximum distance between the traces, to be able to calculate a target function to optimise through due variations of the considered variables. The omission of a similar approach inevitably compels to use a sophisticated instrumentation and to the active intervention of the operator, giving the process a "handicraft" character not in line with the modern automation requirements. A mathematical approach useful to the determination of the target function is given by the following argument, which refers to the simplified schematisation of **Figure 3** in which we see the combiner reduced to the adder SOM, to the RIT delay block, and to the phase shifter SFAS. At the input of the receiver a signal Vtx = $A_o$ e $^{-j(2\pi ft+\varphi o)}$ is present, consisting, for description convenience, of a single frequency component of the spectrum transmitted. At the receiving side we shall have:

$$V_M = M\ e^{\,-j(2\pi f(t+\tau)+\varphi D)} \tag{1}$$

$$V_D = D \, e^{-j(2\pi ft + \varphi M + \beta)}$$

Let $A_{max} = \max(M, D)$ and $A_{max\,dB} = 20\log_{10}A_{max}$,
$A_{min} = \min(M, D)$ and $A_{min\,dB} = 20\log_{10}A_{min}$
We shall obtain:

$$\alpha = \frac{A_{max}}{A_{min}} \geq 1, \tag{2}$$

Equalizing the delay of the $V_M$ and $V_D$ signals at the centre band frequency fo, and letting $\varphi_M = \varphi_D = 0$ without impairing the generality of the following, we have:

$$\beta = 2\pi fo\tau \tag{3}$$

for the delay equalization.

Denoting $\rho$ a signal called "counterphase" consisting of the module of the difference of signals received (1) and equalized according to the (3), evaluated at $\Delta f$ distance from centre band, being $f = fo + \Delta f$, we obtain:

$$\rho^2 = A_{max}^2 \left[ (\alpha - 1)^2 + \left( 2\sqrt{\alpha}\, \sin(\pi \cdot \Delta f \cdot \tau) \right)^2 \right] \tag{4}$$

equivalent to:

$$20 \log_{10} \rho = 20 \log_{10} A_{max} \left[ (\alpha - 1)^2 + \left( 2\sqrt{\alpha} \sin(\pi \cdot \Delta f \cdot \tau) \right)^2 \right]^{1/2} \tag{4'}$$

Assuming as reference $A_{max} = 1$ [that is, 0 dB], we define:

$$\Delta P \,[\text{dB}] = A_{max\,dB} - 20 \log_{10} \rho \tag{5}$$

and considering the (4') we shall also have:

$$\tau = \frac{1}{\pi \cdot \Delta f} \cdot \arcsin \sqrt{\frac{10^{\frac{-\Delta P}{10}} - (\alpha - 1)^2}{4\alpha}} \tag{6}$$

Whenever the total power P in dB of the combined signal Vcomb were taken as reference instead of $A_{max}$, we see from what indicated below that P depends on the degree of spatial equalization of the two signals at centre-band. In fact, being $P\,\text{dB} = A_{max}\,\text{dB} + A\min\,\text{dB}$, we obtain

P = 6 dB      with Amax dB - Amin dB = 0dB;
P = 5.77 dB      with Amax dB - Amin dB = 0.5dB;
P = 5.53 dB      with Amax dB - Amin dB = 1dB.

The following tables show some $\Delta P$ values [in dB] as $\tau$ varies, for two values of the parameter $\Delta f$ and for three values of $\alpha$.

## TABLE 1

| τ (ns) | Δf = 5MHz | | |
|---|---|---|---|
| | Amplitude equalization | | |
| | $(A_{max\,dB} - A_{min\,dB} = 0dB)$ $\alpha=1$ $\Delta P[dB]$ | $(A_{max\,dB} - A_{min\,dB} = 0.5dB)$ $\alpha=1.0593$ $\Delta P\,[dB]$ | $(A_{max\,dB} - A_{min\,dB} = 1dB)$ $\alpha=1.1220$ $\Delta P\,[dB]$ |
| 0.5 | 36 | 24.2 | 18.1 |
| 1 | 30 | 23.4 | 17.9 |
| 1.5 | 26.5 | 22.3 | 17.5 |
| 2 | 24 | 21.1 | 17.1 |
| 2.5 | 22.1 | 19.9 | 16.6 |
| 3 | 20.5 | 18.8 | 16 |

## TABLE 2

| τ (ns) | Δf = 10 MHz | | |
|---|---|---|---|
| | Amplitude equalization | | |
| | $(A_{max\,dB} - A_{min\,dB} = 0dB)$ $\alpha=1$ $\Delta P[dB]$ | $(A_{max\,dB} - A_{min\,dB} = 0.5dB)$ $\alpha=1.0593$ $\Delta P\,[dB]$ | $(A_{max\,dB} - A_{min\,dB} = 1dB)$ $\alpha=1.1220$ $\Delta P\,[dB]$ |
| 0.5 | 30 | 23.4 | 17.9 |
| 1 | 24 | 21.1 | 17.1 |
| 1.5 | 20.5 | 18.8 | 16 |
| 2 | 18 | 16.9 | 14.8 |
| 2.5 | 16.1 | 15.2 | 13.7 |
| 3 | 14.5 | 13.8 | 12.6 |

It can be noticed in the tables that the ΔP function quickly decreases as τ increases, consequently small τ variations have strong effects on the ΔP. It can be noticed also that, at equal τ, the ΔP decreases as the Δf and the amplitudes disequalization degree α at centre-band increase, as already pointed out.

**Figure 4** gives a visual aid in evaluating the dependence of the ΔP function of the sole frequency variation Δf on the centre-band frequency fo. For this purpose, in the figure it is shown the spectrum of the counterphase signal $\rho^2$ given by the (4), for $\alpha = 1$, according to the frequency variation Δf. It is also shown the reference $A_{max}$ to allow for the immediate evaluation of the ΔP trend given by the (5). In Figure 4 we see that the ΔP difference is maximum at centre-band, to quickly decrease then with symmetric trend as Δf increases. The mathematical expressions given above, Tables 1 and 2 and Figure 4 assert that, once the Δf is fixed, the ΔP quickly decreases at the gradual increase of the absolute value of the delay τ existing between the signals on the two paths of the combiner at the combination point SOM. It is then right to take the ΔP(τ) function as target function to maximize, to reach the best equalization characterized by the minimum delay τ. The equalization of the delay necessarily requires the simultaneous presence of the two signals (1) on two paths of the combiner, so it is worth to consider in Figure 4 the in-phase sum of signals $V_{Meq}$ and $V_{Deq}$ as new possible reference signal, that in the case of a = 1 results 6 dB over the previous selection. Before describing the flow chart of the preliminary equalization procedure it is introduced the following Table 3 that shows the constants used in some implementation steps and their meaning. It must be said that the constants indicated in Table 3 are expressed in dB, and that are used in the comparison with differences of voltage values, which are also expressed in dB and indicate power ratios of the signals being compared.

TABLE 3

| Constants | Notes | Typical values |
|---|---|---|
| K1 | Absence of power variations in the single signal received by Main or Diversity receiver. | 1 dB |
| K2 | Absence of great asymmetries between the signals received by the two receivers Main and Diversity. | 3 dB |
| K3 | Absence of multipath phenomena on the two receivers Main and Diversity. | 2 dB |
| K4 | Power difference P between the outputs of filters $FLT_l$ and $FLT_h$ in Pmin condition; expresses the symmetry in counterphase condition. | 2 dB |
| K5 | Target: $\tau_{residual}$ < 1.5 ns with amplitude variation lower than 0.5 dB (see Table 2 with $\Delta f$ = 10 MHz). | 19 dB |
| $\Delta\varphi$ | Phase shift step | 3° |

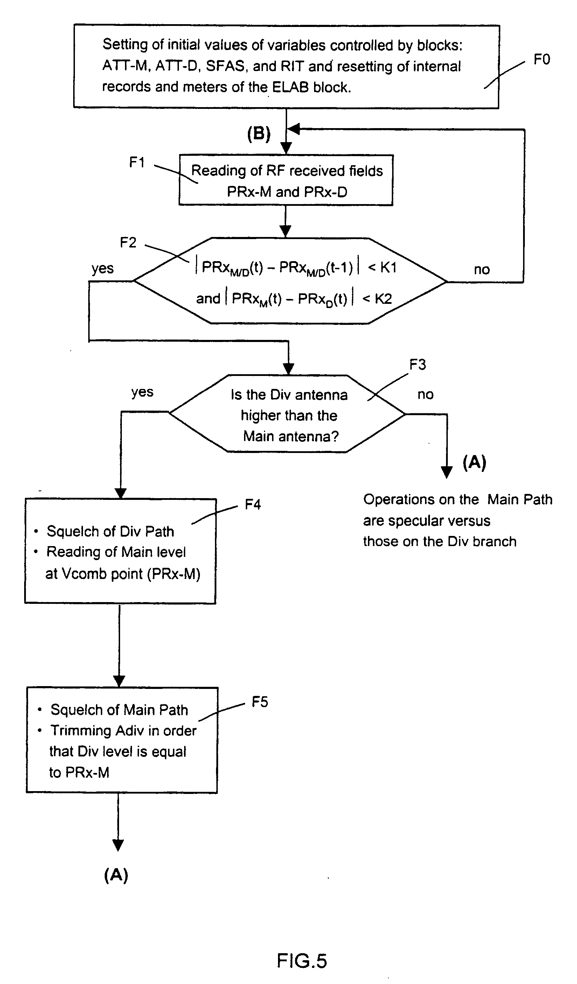

With reference to **Figures 5, 6 and 7,** and to the previous ones, the subject method (performed by the microprocessor ELAB under the control of a stored program) starts from step F0 in which the initial values of the variables controlled by blocks: ATT-M, ATT-D, SFAS, and RIT are set, and the internal records and counters used by the microprocessor ELAB are reset; in particular an initial delay $\tau_{iniz}$ is set. In the next step F1, the PRx-M and PRx-D values are read, indicating the power of the radiofrequency signals received by Main and Diversity receivers, respectively. The input in step F1 is shown in the figures with reference **(B).** In the next step F2, for each of the two Main and Diversity receivers, it is calculated the module of the difference between the present power value of the received signal $PRx_{M/D}$ (t) and a stored power value $PRx_{M/D}$(t-1) preceding the present one of a preset sampling interval. For each receiver the comparison is made between the calculated module and the constant K1 of Table 3, to check whether a flat fading in band, involving one of the two receivers, is present or not. Still in step F2 it is calculated the module of the difference between the present power value of the received signal PRx-M(t) on the Main path and the present power value PRx-D(t) received on the Diversity path, the module is immediately compared with the constant K2 of Table 3 to check that an atmospheric event capable of causing dissymmetry between the powers received on the two antennas is not underway. The results of the two comparisons with constants K1 and K2 are put in AND to obtain a unique response to the global test made in step F2. The acquisition step F1 and test step F2 are cyclically repeated until the test result in F2 defines that the signals received are adequate to be used in the following procedure steps, starting from F3 in which it is defined which antenna is placed at a higher level. The treated case is the more general one, which foresees a vertical spacing between the two antennas; in this case the stronger signal is supposed to be the one received at the higher antenna. The test in F3 would not require the intervention of the operator whenever the reciprocal position of the antennas were rigidly fixed; however, a greater design flexibility is preferred giving the operator the possibility to chose the position time by time. Assuming that the Diversity ANT-D antenna is the higher one, in the next step F4 the signal on the homonymous path is squelched and the Vcomb signal at the output of adder SOM is read and stored. Therefore, the read-out corresponds to the signal PRx-M after passing through the Main path. In the next step F5 dual operations are made, that is, the signal on the Main path is silenced and the signal Vcomb read, having care to act on the attenuator ATT-D placed on the Diversity path through the control voltage $A_{Div}$ in order to equalize the Vcomb signal just read to the value previously stored. The aggregate of the two steps F4 and F5 leads to the equality of Main and Diversity signals in the measurement point Vcomb executing the condition $\alpha$ = 1 so that we have the maximum power transfer in the combined signal Vcomb and the reduction of the $\Delta P$ due to dissymmetry is avoided. If in the test of step F3 the main antenna ANT-M results being the highest, the operations of steps F4 and F5 are made in dual way for the Main path. In both cases, at the end of step F5 the squelch is excluded and "Rotation" counter and records (memory words) are reset; the same counter and records shall be used in step F8. The procedure enters an equalization cycle of the static delay $\tau$ starting from step F6 in which the "Rotation" counter is increased by one unit. The input in step F6 is indicated in the figures with reference **(C)**.

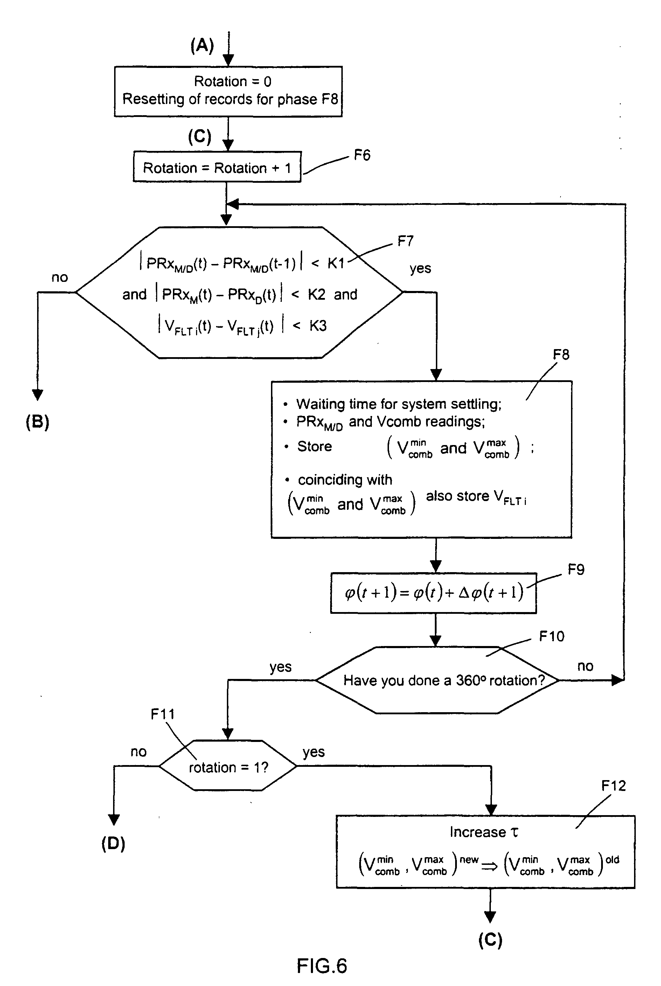

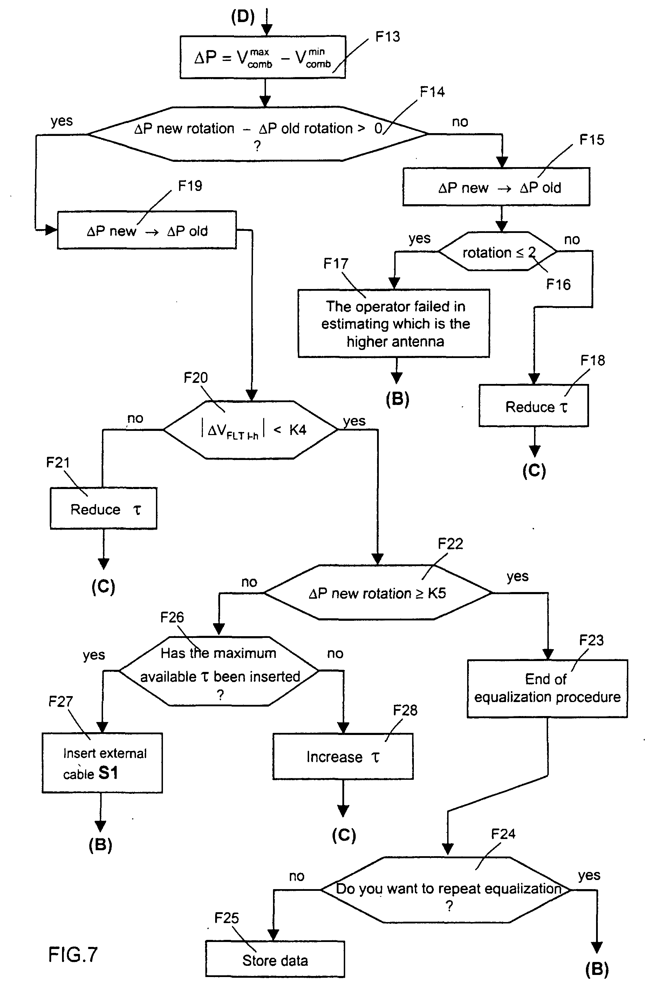

The equalization cycle essentially includes two deep-nested cycles, of which the inner one is made of the steps F6, F7, F8, F9, and F10 made in sequence, in which the conditions for the calculation of the target function ΔP to maximize are defined. On the contrary, the more external cycle appears less evident from the diagram of figures 6 and 7 due to the numerous test featuring it; nevertheless, it can be noticed that it includes the ΔP calculation step and the increase or decrease steps of the delay τ until reaching the pre-set target and the end of the equalization procedure.

The step F7 includes the tests described for step F2 as a whole, to which third tests are added, the results of which are put in AND with the logic values generated by the conditions of previous tests. The third tests consist in calculating the modules of the differences between the detected voltage rates $V_{FLT\,i}$ (obtained alternatively silencing the Main signal and the Diversity signal) coming from all the possible couples of filters included in the DISP network. Two indexes i and j indicate the filters of a generic couple. The indexes assume the values 1 to 3 in accordance with the following conditions: $i \neq j$ and $i,j = ji$, reducing the possible couples only to three. Each module so computed is individually compared with the constant K3 of Table 3 and each result of the comparison is put in AND. Through the third tests it is checked if a selective fading is present in the band of the modulated signal. This kind of fading can be compared to a notch crossing the radiofrequency band of the modulated signal with a frequency speed up to 300 MHz/ s, and therefore can be captured at the sampling frequency of the voltage $V_{FLT\,i}$. The reduction of the comparisons by couples is perfectly capable of detecting the notch presence, because in the band of the filter where the notch is located, or in the transition band between two filters, a power drop is determined involving the passing of the threshold, defined by the constant K3, by the module of at least a couple of differences. The test of step F7 is more sophisticated than that made in the previous step F2 and more accurate in determining an atmospheric event which is particularly adverse for the continuation of the delay equalization. Should the test of step F7 give a false logic value, the program returns to point **(B)** for the repetition of the starting cycle consisting of steps F1 and F2 and then continuing as previously said. In the opposite condition, the inner cycle proceeds with the execution of step F8 in which at first a brief settling time is observed of the time constants of the system (the waiting time is needed in the successive repetitions of the cycle after the phase shifting performed in step F9), afterwards, the PRx-M, PRx-D values are read and shall be used for the successive repetitions of step F7, and the Vcomb value is stored. The step F8 continues with the comparison of the new Vcomb value with two records containing a previous maximum and minimum value of Vcomb; if the new value is higher than or equal to the maximum stored value, or lower than or equal to the minimum stored value, then it replaces the stored value and in the meantime the new three values of voltage $V_{FLT\,i}$ detected at the output of the relevant filters are stored. Stored voltage rates $V_{FLT\,i}$ (obtained by alternatively silencing the Main signal and the Diversity signal), coinciding with the maximum values of Vcomb, shall be used in the test of step F7, while those stored in coincidence with the minimum values of Vcomb shall be used later on in a step F18. In the next step F9 the microprocessor ELAB sends a command Δφ-COM to the phase shifter SFAS to induce a phase shifting Δφ of 3 degrees, bringing the phase at the output of the SFAS block from φ(t) to φ(t+1)=φ(t)+Δφ. Thereafter, in step F10 a test on the "Rotation" counter is made to verify if a of 360-degree rotation has been completed. The negative response determines the continuation of the internal cycle F7÷F10, while the affirmative response involves the cycle exit. At the output from the internal cycle, in the records used in step F8 the Vcomb max and Vcomb min values, that were determined with phase increases sufficiently small to be able to follow any Vcomb variation, that is, to succeed in discriminating the maximum and minimum points, are stored. Phase shifting values lower than 3° do not introduce a significant improvement. At the same time, the completion of the 360° rotation assures that all the possible values that the Vcomb voltage can assume, due to the phase shifting between $V_M$ and $V_D$ signals at the inputs of the adder SOM, have been analysed. Hence, it is guaranteed that the Vcomb max value corresponds to the sum in phase of the above-mentioned signals, while the Vcomb min value corresponds to the sum in counterphase of the same. The calculation of the target function ΔP = Vcomb max - Vcomb min results then immediate; however, it is proposed in step F13 because the condition in which the internal rotation F6÷F10 is made for the first time or afterwards must be identified through a test made in step F11 (on a flag set at the first 360° phase rotation); this because when the rotation is made for the first time the delay τ (having initial value $τ_{iniz}$) must be increased before being able to evaluate the effects on the target function ΔP, while in the following rotations (as we shall see) at the input in step F11 the opportune correction actions on the delay τ have already been made. This said, in the case in which it results that only the first 360° phase rotation has been made in F11, in the next step F12 the microprocessor ELAB sends a command Δτ-COM to the RIT network to induce an increase Δτ of the initial delay $τ_{iniz}$; afterwards the internal cycle F6÷F10 is repeated, at the end of which the old values of Vcomb max and Vcomb min and of $V_{FLT\,i}$ shall be replaced by the new ones (as indicated in step F12). At this point, the first 360° phase rotation is terminated (concerning the first increase of the delay τ, but not yet the first comparison on the ΔP) and the test of step F11 automatically involves the continuation in step F13 in which the target function ΔP is calculated. The fact of having started the equalization cycle of the static delay with an increase of the delay τ means that we are acting on the path, along which it is supposed that the signal has the shortest path, and that the delay $τ_{iniz}$ originally set, is typically insufficient to compensate the path difference between the Main and Diversity signals at the inputs of the adder SOM.

In the next step F14 a comparison is made between the new value of the ΔP just calculated and the old ΔP value stored at the end of the previous 360° phase rotation; a positive result of the comparison means a progress in the maximization of the target function, therefore improving the delay equalization. At the output of the first and second 360° phase rotation the second term of the comparison in F14 remains in the initial zero condition, and in this case the test must give a positive value. In case of negative result , step F15, in which the new ∆P value replaces the old one in the appropriate record, is made first. In the next step F16 a test is made to determine if the number of 360° phase rotations is not greater than two; if so, a negative response to the test of step F14 would be unacceptable, because the second term of the comparison in F14 is still null and, with the assumptions made on paths and initial delay, the present ∆P must be positive. In step F17 the negative response is interpreted as a wrong selection of the relative heights of antennas. The microprocessor control program returns to point (B) immediately after the step F0 to restart the procedure, giving the operator the opportunity to make the correct selection of the antennas in step F3. On the contrary, if the negative response to the test of step F14 is due to comparisons following the first test made from the third 360° phase rotation, employing a non null value of ∆P, it means that the increase of the τ was excessive and therefore the delay τ must be decreased. This is made in step F18; then the program returns to point **(C)** for the repetition of the deep-nested cycle_F6÷F10 and repetition of the main cycle for the search of the best. The steps F13÷F18 belong to the outer cycle, while steps F11 and F12 could be assigned to both the cycles.

We shall now follow the way featured by a positive response to the test in F14, which in itself does not assure yet the improvement of the equalization because such a response could have been caused by a distortion of the spectrum of the modulated signal. Following this way, step F19 (identical to F15), in which the new ∆P value replaced the old one in the appropriate record, is made first. In the next step F20 a test is made to check if the successful result in F14 was accompanied by spectral distortion. More in detail, in step F20 is evaluated the module of the difference between signals $V_{FLT\,l}$ and $V_{FLT\,h}$ stored in step F8 and this module is compared with the constant K4 of Table 3. If the calculated module exceeds the value K4 it means that there is spectral distortion in the counterphase signal; in such a case the delay τ instead of being increased, is reduced in step F21, and the program returns to point **(C)** for the repetition of the deep-nested cycle F6÷F10. If on the contrary the test in F20 confirms the absence of spectral distortion in the counterphase signal, it means that the equalization proceeds correctly towards the minimization of the delay τ and the only thing to do is to check if the pre-set target has been reached. This is made by the test on the value ∆P as soon as stored in F19, which is compared in step F22 with the constant K5 of Table 3 indirectly representing the desired accuracy on the delay τ through the relation (6) and the indications of Table 2. If it results that ∆P exceeds the predetermined target, or coincides with the same, then in step F23 the decision of ended equalization, accompanied by a message addressed to the operator, is taken. In step F24 an additional message is sent to the operator to ask if he wants to repeat the equalization, in the affirmative, the program returns to point **(B)**. Otherwise, in step F25 the main data concerning the equalization just terminated are stored, among which the most important one is the τ delay value globally set in the RIT network. The latter includes the initial delay $\tau_{iniz}$ plus the delay r (that starting from different assumptions could also result negative) introduced by the procedure according to the invention; the optimization of the target function ∆P causes the residual delay $\tau_{residual} = \tau_{iniz} + \tau$ to satisfy the target criterion sanctioned by constant K5 of Table 3. If the test of step F22 indicates that the required value of ∆P has not yet been reached, it means that the strategy to increase the τ undertaken in the previous step F12 was correct and it is convenient to follow it. A test is then made in the next step F26 to define if all the τ, available in the RIT network, has been employed. In the affirmative, step F27 sends a message to the operator to warn him that a manual operation is necessary to insert a length of external cable in the patching point **(S1)**. After insertion, the operator restarts the program that returns to the starting point **(B),** after having reset the record storing the last ∆P and set the initial delay value $\tau_{iniz}$. Should the test of the step F26 give negative result, it means that there is further availability of delay elements in the RIT network and therefore it is possible to perform the next step F28 for the increase of the delay τ. The program returns then to point (C) for a new iteration of the inner cycle. The steps F19 to F28 all belong to the external equalization cycle.

The procedure of figures 5, 6 and 7, given as a non-confining example, is now generalised concerning the increase and decrease of the delay τ. As already said, the increase of the delay τ made in step F12 assumed the setting of an initial delay $\tau_{iniz}$ insufficient to compensate the path difference between the two paths of the combiner. The increase of the delay τ made in step F28 obeyed to the same logic, as well as the delay reduction made in steps F18 and F21. However, the selection made on the initial delay $\tau_{iniz}$ is not binding, in fact, nothing would prevent to set an initial delay $\tau_{iniz}$ higher than the necessary one, in this case the steps that before were of delay increase, would become now decrease ones. However, this second choice has not to be preferred because it would immediately saturate a great part of the delay cells of the RIT network. The two different starting hypothesis on the initial delay $\tau_{iniz}$ involve both a ∆τ in the direction of reduction of the total delay, and therefore a step in the direction of the best target function ∆P. The increase or decrease of the delay τ can be made by constant or variable steps, however, it is preferred to calculate variable steps on the basis of the progress in the direction of the best, similarly to what happens in the gradient method. Adopting this strategy, the absolute value of the current ∆τ step is selected as a function of the absolute value of the difference between the ∆P calculated in step F14. In this case we shall have:

$$|\Delta\tau| = \mu|\Delta P \text{ new rotation} - \Delta P \text{ old rotation}| \qquad (7)$$

and the convergence towards the maximum of the target function $\Delta P$ will result accelerated.

From the description of the implementation program of the equalization procedure it can be noticed that the same is completely executed in an automatic way by the microprocessor ELAB; the interventions of the operator only concern the initialisation operations, as for instance the program starting and the selection of the higher antenna, or the response to dedicated messages. In no case it is requested the operator intervention to express judgements during the equalization procedure running or to condition the same procedure acting on the control variables, contrarily to the methods of the known art in which it was requested an evaluation of oscilloscopic traces and the sending of commands to the processor for the insertion of a measured delay. The possible insertion of a cable length does not alter the automatism of the procedure, but proposes itself again as a new initialisation for particular cases or according to explicit request of some users.

## Claims

1.  Preliminary equalization method of signals received by a space diversity receiver including:

    *   two front-end radio receivers (RIC-M, RIC-D), called Main and Diversity, connected to two homonymous paths run by the received signals;
    *   electronically controlled signal level regulating means (ATT-M, ATT-D) on at least one of the two paths;
    *   an electronically controlled variable phase shifter (SFAS) on either path;
    *   an electronically controlled delay network (RIT) inserted preferably on the shortest path,
    *   a combiner of signals (SOM) placed at the end of the two paths;
    *   a digital controller (ELAB) for controlling said electronically controlled means,

    **characterized in that** said digital controller (ELAB) carries out the steps of:

    a) sending commands ($A_{Main}$, $A_{Div}$) to the signal level regulating means (ATT-M, ATT-D) for individual regulating the power levels of Main and Diversity signals (PRx-M, PRx-D) downstream the combiner (SOM), up to matching the measured levels of said signals at said combiner (SOM);
    b) sending commands ($\Delta\varphi$-COM) to said variable phase shifter (SFAS) for the progressive phase shifting of the relevant signal (PRx-D), introducing phase increases sufficiently small to be able to discriminate the maximum and minimum points in the power of the combined signal (Vcomb), updating the stored maximum and minimum power values of the combined signal (Vcomb) at each phase shifting step and calculating on completion of a round angle the maximum power variation $\Delta P$ of the combined signal (Vcomb) given by the difference between said updated values of maximum and minimum power, said maximum power variation $\Delta P$ in the band of the modulated signal being a decreasing function of the absolute value of the delay $\tau$ between the Main and Diversity signals in the combination point (SOM);
    c) sending a command ($\Delta\tau$-COM) to the delay network (RIT) for introducing a delay variation $\Delta\tau$ the sign of which is in the increasing direction of the value of $\Delta P$ function;
    d) making a comparison between the present value of $\Delta P$ and a constant value (K5) pre-set as target for the accuracy of the above-mentioned equalization, repeating the steps b), c), d) if the target is not reached, and ending said preliminary equalization when said present value of $\Delta P$ results higher than or equal to the preset value (K5).

2.  Preliminary equalization method according to claim 1, **characterized in that** in said step c) the sign of the variation $\Delta\tau$ in the increasing direction of the $\Delta P$ value is determined by the difference between the $\Delta P$ value calculated on completion of a current 360° rotation and a stored value of $\Delta P$ calculated on completion of a 360° rotation immediately preceding the current one, the initial stored value of the $\Delta P$ being preferably null and the $\Delta P$ present value replacing the previous value stored after the above-mentioned comparison.

3.  Preliminary equalization method according to claim 2, **characterized in that** in said execution step c) the absolute value of said variation $\Delta\tau$ of the delay is proportional to the absolute value of said difference between the $\Delta P$ present value and the $\Delta P$ previously stored, accelerating the convergence towards the maximum of the $\Delta P$ function.

4.  Preliminary equalization method according to claim 2 or 3, **characterized in that** said variation $\Delta\tau$ shall maintain

the same sign when said difference between the ΔP is positive.

5. Preliminary equalization method according to one of the previous claims, **characterized in that** said step a) and said progressive phase shifting at said step b) are preceded by a verification cycle checking the absence of irregular propagation due to atmospheric events.

6. Preliminary equalization method according to claim 5, **characterized in that** said verification cycle preceding said step a) includes the following intermediate steps:

   - calculation of the module of the difference between the logarithmic power levels of said Main signal (PRx-M) and a value of the same measured at an immediately preceding acquisition time interval, and comparison of the module with a first preset constant (K1) to test the absence of power variations condition in each signal received by receivers Main and Diversity;
   - calculation of the module of the difference between the logarithmic power level of said Diversity signal (PRx-D) and a value of the same measured at an immediately preceding acquisition time interval, and comparison of the module with said first pre-set constant (K1) to test the previous condition;
   - calculation of the module of the difference between the logarithmic power levels of said Main signals (PRx-M) and Diversity (PRx-D), and comparison of the module with a second pre-set constant (K2) to test the absence of a strong dissymmetry between the signals received by the two receivers Main and Diversity;
   - execution of the AND logic operation between the results of said comparisons, performing said step a) in case of a true result and repeating all the intermediate steps of the verification cycle, including the present one, in the case of a false result.

7. Preliminary equalization method according to one of the previous claims, **characterized in that** said step a) includes the following intermediate steps:

   a1) squelch of the Main or Diversity signal (PRx-M, PRx-D) received by the antenna placed at a higher height on the trellis (ANT-M, ANT-D), measurement and storage of the level of the combined signal (Vcomb);
   a2) squelch of the signal not squelched at the previous step and attenuation of the level of the remaining signal up to matching the measured value of the combined signal (Vcomb) with the value stored in step a1).

8. Preliminary equalization method according to claim 5, **characterized in that** said verification cycle preceding said progressive phase shifting includes the following steps:

   b1) calculation of the module of the difference between the logarithmic power levels of said Main signal (PRx-M) and a value of the same measured at an immediately preceding acquisition time interval, and comparison of the module with a first preset constant (K1) to test the absence of power variations in the signals received by Main and Diversity receivers;
   b2) calculation of the module of the difference between the logarithmic power levels of said Diversity signal (PRx-D) and a value of the same measured at an immediately preceding acquisition time interval, and comparison of the module with said first pre-set constant (K1) to test the previous condition;
   b3) calculation of the module of the difference between the logarithmic power levels of said Main (PRx-M) and Diversity (PRx-D) signals, and comparison of the module with a second pre-set constant (K2) to test the absence of great asymmetry condition between the signals received by the two Main and Diversity receivers;
   b4) calculation of the modules of the difference between the logarithmic power levels ($V_{FLT\,i}$) of different portions of the frequency spectrum ($FLT_l$, $FLT_c$, $FLT_h$) of the modulated signal, and comparison of each module with a third pre-set constant (K3) to test the absence of in-band selective fading condition, due to multiple paths of radio signals;
   b5) execution of the AND logic operation among the results of said comparisons, enabling said progressive phase shifting in case of a true result or restarting the equalization from the beginning in case of false result.

9. Preliminary equalization method according to claim 8, **characterized in that** said different portions of the frequency spectrum of the modulated signal are obtained through three band pass filters_($FLT_l$, $FLT_c$, $FLT_h$) covering adjacent portions of the spectrum with bandwidth of at least one third of the band occupied by said spectrum.

10. Preliminary equalization method according to claim 8 or 9, **characterized in that** the voltage corresponding to said logarithmic power levels ($V_{FLT\,i}$) are stored in said step b) and updated in correspondence with said updated values of maximum and minimum power of the combined signal (Vcomb).

**11.** Preliminary equalization method according to claim 8, **characterized in that** in step c), before introducing one said variation step $\Delta\tau$ to the delay, a test is made to check if said module of the difference between the logarithmic power values ($V_{FLT\,i}$) taken at the two ends of the spectrum stored matching the minimum value of the combined signal is lower than a fourth pre-set constant (K4), the excess of which indicates the lack of symmetry in counterphase of the combined signals ($V_M$, $V_D$); furthermore, a false logic value in the test in presence of a positive value of said difference between $\Delta$P values means an excess of equalization and implies a sign inversion of the variation $\Delta\tau$ of the delay.

**12.** Preliminary equalization method according to one of the previous claims, **characterized in that** in step c), before introducing one said variation step $\Delta\tau$ of the delay corresponding to an increase, a test is made to determine if the whole available delay of the delay network (RIT) has been used, in case of affirmative response restarting the equalization procedure after having inserted a length of cable in a patching point (S1) downstream the delay network (RIT).

**13.** Preliminary equalization method according to one of the previous claims, **characterized in that** said maximum power variation $\Delta$P has the following expression:

$$\Delta P \text{ [dB]} = A_{\text{max dB}} - 20 \log_{10} \rho,$$

where

$$20 \log_{10} \rho = 20 \log_{10} A_{\max} \left[ (\alpha - 1)^2 + \left(2\sqrt{\alpha} \sin(\pi \cdot \Delta f \cdot \tau)\right)^2 \right]^{1/2}$$

$$\alpha = \frac{A_{\max}}{A_{\min}} \geq 1, \ \Delta f = f - f_o$$

at centreband, and
$A_{\max}$ and $A_{\min}$ being respectively the maximum and the minimum module of the vectors representing the two signals ($V_M$, $V_D$) at the combiner inputs (SOM).

**Patentansprüche**

**1.** Verfahren zur zusätzlichen Entzerrung von Signalen, die von einem Raumdiversität-Funkempfänger empfangen werden, das Folgendes umfasst:

zwei Frontend-Funkempfänger (RIC-M, RIC-D), genannt "Main" und "Diversity", die auf zwei homonyme Signalwege geschaltet sind, die von den empfangenen Signalen durchlaufen werden;

ein elektronisch gesteuertes Mittel zur Regelung des Signalpegels (ATT-M, ATT-D) auf mindestens einem der beiden Signalwege;

einen elektronisch gesteuerten variablen Phasenschieber (SFAS) auf jedem der Signalwege;

ein elektronisch gesteuertes Verzögerungs-Netzwerk (RIT), das vorzugsweise in den kürzesten Signalweg eingefügt wird;

eine Signalkopplereinheit (SOM), die am Ende der beiden Signalwege angeordnet ist;

eine digitale Steuereinheit (ELAB) zur Steuerung des besagten elektronisch gesteuerten Mittels, **dadurch gekennzeichnet, dass** die besagte digitale Steuereinheit (ELAB) folgende Schritte ausführt:

a) Senden von Befehlen ($A_{Main}$, $A_{Div}$) an das Mittel zur Regelung des Signalpegels (ATT-M, ATT-D) zwecks individueller Regelung der Leistungspegel des der Signalkopplereinheit (SOM) nachgeschalteten Main- bzw. des Diversity-Signals (PRx-M, PRx-D), bis die gemessenen Pegel der besagten Signale an der besagten Signalkopplereinheit (SOM) erreicht sind;

b) Senden von Befehlen ($\Delta\varphi$-COM) an den besagten variablen Phasenschieber (SFAS) zwecks schrittweiser Verschiebung der Phase des relevanten Signals (PRx-D), wobei ausreichend geringe Erhöhungen der Phase ermöglichen, den Maximalpunkt und den Minimalpunkt in dem Leistungspegel des kombinierten Signals ($V_{komb}$) zu unterscheiden, Aktualisieren des gespeicherten maximalen und minimalen Leistungswertes des kombinierten Signals ($V_{komb}$) bei jedem Phasenverschiebungsschritt sowie bei Beenden einer Phasendrehung Berechnen der maximalen Leistungsschwankung AP des kombinierten Signals ($V_{komb}$), die sich aus der Differenz zwischen den besagten aktualisierten Werten für den maximalen und den minimalen Leistungspegel ergibt, wobei die besagte maximale Leistungsschwankung $\Delta P$ im Frequenzband des modulierten Signals eine abnehmende Funktion des absoluten Werts der Verzögerung $\tau$ zwischen dem Main- und dem Diversity-Signal am Signaladdierglied (SOM) ist;

c) Senden eines Befehls ($\Delta\tau$-COM) an das Verzögerungs-Netzwerk (RIT) zwecks Einfügens einer Verzögerungsschwankung $\Delta\tau$, deren Vorzeichen sich nach der Richtung der Zunahme des Werts der $\Delta P$-Funktion richtet;

d) Vergleichen des aktuellen Wertes von $\Delta P$ mit einem konstanten Wert (K5), der vorab als Zielwert für die Genauigkeit der oben erwähnten Entzerrung definiert wurde, wobei die Schritte b), c), d) wiederholt werden, wenn der Zielwert nicht erreicht wird, und wobei die besagte zusätzliche Entzerrung beendet wird, wenn der besagte aktuelle Wert von $\Delta P$ größer oder gleich dem voreingestellten Wert (K5) ist.

2. Verfahren zur zusätzlichen Entzerrung nach Anspruch 1, **dadurch gekennzeichnet, dass** in dem besagten Schritt c) das Vorzeichen der Schwankung $\Delta\tau$ sich nach der Richtung der Zunahme des $\Delta P$-Werts richtet durch die Differenz zwischen dem $\Delta P$-Wert, der bei Beendigung einer aktuellen 360°-Phasendrehung berechnet wird, und einem gespeicherten Wert für $\Delta P$, der am Ende einer 360°-Phasendrehung berechnet wird, die der aktuellen unmittelbar vorangegangen ist, wobei der anfängliche gespeicherte Wert für $\Delta P$ vorzugsweise Null ist und der aktuelle $\Delta P$-Wert den zuvor gespeicherten Wert nach Abschluss des vorstehend erwähnten Vergleichs ersetzt.

3. Verfahren zur zusätzlichen Entzerrung nach Anspruch 2, **dadurch gekennzeichnet, dass** in dem besagten Ausführungsschritt c) der absolute Wert der besagten Schwankung $\Delta\tau$ der Verzögerung sich proportional verhält zu dem absoluten Wert der besagten Differenz zwischen dem aktuellen $\Delta P$-Wert und dem zuvor gespeicherten $\Delta P$-Wert, wodurch die Konvergenz des Maximalwerts der $\Delta P$-Funktion beschleunigt wird.

4. Verfahren zur zusätzlichen Entzerrung nach Anspruch 2 oder 3, **dadurch gekennzeichnet, dass** die besagte Schwankung $\Delta\tau$ dasselbe Vorzeichen behält, wenn besagte Differenz zwischen den $\Delta P$-Werten positiv ist.

5. Verfahren zur zusätzlichen Entzerrung nach einem der vorstehenden Ansprüche, **dadurch gekennzeichnet, dass** dem besagten Schritt a) und der besagten schrittweisen Phasenverschiebung in dem besagten Schritt b) ein Überprüfungszyklus vorausgeht, in dem die Abwesenheit irregulärer Ausbreitungserscheinungen aufgrund von atmosphärischen Ereignissen überprüft wird.

6. Verfahren zur zusätzlichen Entzerrung nach Anspruch 5, **dadurch gekennzeichnet, dass** der besagte Überprüfungszyklus, der dem besagten Schritt a) vorausgeht, folgende Zwischenschritte umfasst:

- Berechnen der Verhältniszahl der Differenz zwischen den logarithmischen Leistungspegeln des besagten Main-Signals (PRx-M) und einem Wert desselben, der in einem unmittelbar vorangegangenen Ermittlungszeitintervall gemessen wurde, sowie Vergleichen der Verhältniszahl mit einer ersten vorab definierten Konstante (K1) um zu überprüfen, ob in den einzelnen Signalen, die von den Empfängern Main und Diversity empfangen werden, keinerlei Pegelschwankungen vorhanden sind;

- Berechnen der Verhältniszahl der Differenz zwischen den logarithmischen Leistungspegeln des besagten Diversity-Signals (PRx-D) und einem Wert desselben, der in einem unmittelbar vorangegangenen Ermittlungszeitintervall gemessen wurde, sowie Vergleichen der Verhältniszahl mit der besagten ersten vorab definierten Konstante (K1), um die vorstehende Bedingung zu überprüfen;

- Berechnen der Verhältniszahl der Differenz zwischen den logarithmischen Leistungspegeln der besagten Main-Signale (PRx-M) und Diversity-Signale (PRx-D) sowie Vergleichen der Verhältniszahl mit einer zweiten vorab definierten Konstante (K2) um zu überprüfen, ob zwischen den Signalen, die von den beiden Empfängern Main und Diversity empfangen werden, keinerlei starke Asymmetrie herrscht;

- Ausführen der logischen UND-Operation (AND) zwischen den Ergebnissen der besagten Vergleiche, wobei besagter Schritt a) ausgeführt wird, wenn das Ergebnis wahr ist, und alle Zwischenschritte des Überprüfungszyklus einschließlich des vorliegenden wiederholt werden, falls das Ergebnis falsch ist.

7. Verfahren zur zusätzlichen Entzerrung nach einem der vorstehenden Ansprüche, **dadurch gekennzeichnet, dass** der besagte Schritt a) folgende Zwischenschritte umfasst:

a1) Unterdrücken des Main- oder des Diversity-Signals (PRx-M, PRx-D), das an der in größerer Höhe auf dem Trellis angeordneten Antenne (ANT-M, ANT-D) empfangen wird, Messen und Speichern des Pegels des kombinierten Signals ($V_{komb}$) ;
a2) Unterdrücken des anderen, im vorigen Schritt nicht unterdrückten Signals und Dämpfen des Pegels des verbleibenden Signals, bis der gemessene Wert des kombinierten Signals ($V_{komb}$) dem in Schritt a1) gespeicherten Wert entspricht.

8. Verfahren zur zusätzlichen Entzerrung nach Anspruch 5, **dadurch gekennzeichnet, dass** der besagte Überprüfungszyklus, der der besagten schrittweisen Phasenverschiebung vorausgeht, folgende Schritte umfasst:

b1) Berechnen der Verhältniszahl der Differenz zwischen den logarithmischen Leistungspegeln des besagten Main-Signals (PRx-M) und einem Wert desselben, der in einem unmittelbar vorangegangenen Ermittlungszeitintervall gemessen wurde, sowie Vergleichen der Verhältniszahl mit einer ersten vorab definierten Konstante (K1) um zu überprüfen, ob in den einzelnen Signalen, die von den Empfängern Main und Diversity empfangen werden, keinerlei Pegelschwankungen enthalten sind;

b2) Berechnen der Verhältniszahl der Differenz zwischen den logarithmischen Leistungspegeln des besagten Diversity-Signals (PRx-D) und einem Wert desselben, der in einem unmittelbar vorangegangenen Ermittlungszeitintervall gemessen wurde, sowie Vergleichen der Verhältniszahl mit der besagten ersten vorab definierten Konstante (K1), um die vorstehende Bedingung zu überprüfen;

b3) Berechnen der Verhältniszahl der Differenz zwischen den logarithmischen Leistungspegeln der besagten Main-Signale (PRx-M) und Diversity-Signale (PRx-D) sowie Vergleichen der Verhältniszahl mit einer zweiten vorab definierten Konstante (K2) um zu überprüfen, ob zwischen den Signalen, die von den beiden Empfängern Main und Diversity empfangen werden, keinerlei starke Asymmetrie herrscht;

b4) Berechnen der Verhältniszahlen der Differenz zwischen den logarithmischen Leistungspegeln ($V_{FLTi}$) verschiedener Teilbereiche des Frequenzspektrums ($FLT_l$, $FLT_c$, $FLT_h$) des modulierten Signals sowie Vergleichen der einzelnen Verhältniszahlen mit einer dritten vorab definierten Konstante (K3) um zu überprüfen, ob innerhalb des Frequenzbandes keinerlei frequenzselektiver Schwund aufgrund mehrerer Signalwege von Funksignalen vorliegt;

b5) Ausführen der logischen UND-Operation (AND) für die Ergebnisse der besagten Vergleiche, wobei besagte schrittweise Phasenverschiebung ausgeführt wird, wenn das Ergebnis wahr ist, oder die Entzerrungsprozedur von Anfang an wiederholt wird, falls das Ergebnis falsch ist.

9. Verfahren zur zusätzlichen Entzerrung nach Anspruch 8, **dadurch gekennzeichnet, dass** die besagten verschiedenen Teilbereiche des Frequenzspektrums des modulierten Signals mithilfe von drei Bandpassfiltern ($FLT_l$, $FLT_c$, $FLT_h$) erhalten werden, die benachbarte Teilbereiche des Frequenzspektrums abdecken und deren Bandbreite mindestens ein Drittel des von besagtem Frequenzspektrum belegten Frequenzbandes beträgt.

10. Verfahren zur zusätzlichen Entzerrung nach Anspruch 8 oder 9, **dadurch gekennzeichnet, dass** die Spannungen, die den besagten logarithmischen Leistungspegeln ($V_{FLTi}$) entsprechen, in besagtem Schritt b) gespeichert werden und entsprechend durch besagte aktualisierte Werte des maximalen und des minimalen Leistungspegels des kombinierten Signals ($V_{komb}$) ersetzt werden.

**11.** Verfahren zur zusätzlichen Entzerrung nach Anspruch 8, **dadurch gekennzeichnet, dass** in dem Schritt c), vor dem Durchführen des besagten einen Änderungsschritts $\Delta\tau$ für die Verzögerung ein Test durchgeführt wird, mit dem überprüft wird, ob die besagte Verhältniszahl der Differenz zwischen den logarithmischen Leistungspegeln ($V_{FLTi}$), die an den beiden Enden des Frequenzspektrums gemessen und gespeichert wird und die dem Minimalwert des kombinierten Signals entspricht, kleiner ist als eine vierte vorab definierte Konstante (K4), wobei ein Überschreiten dieses Wertes eine fehlende Symmetrie in der Gegenphase des kombinierten Signals ($V_M$, $V_D$) anzeigt; und ferner, dass ein falscher logischer Wert im Test bei Vorliegen eines positiven Werts der besagten Differenz zwischen den $\Delta$P-Werten ein Übermaß an Entzerrung bedeutet und eine Umkehrung des Vorzeichens der Verzögerungsschwankung $\Delta\tau$ impliziert.

**12.** Verfahren zur zusätzlichen Entzerrung nach einem der vorstehenden Ansprüche, **dadurch gekennzeichnet, dass** in Schritt c, vor dem Durchführen des besagten einen Änderungsschritts $\Delta\tau$ für die Verzögerung, der einer Erhöhung entspricht, ein Test durchgeführt wird um festzustellen, ob alle verfügbaren Verzögerungswerte des Verzögerungs-Netzwerks (RIT) benutzt wurden, wobei im Fall eines positiven Ergebnisses die Entzerrungsprozedur erneut gestartet wird, nachdem eine Kabellänge an einem dem Verzögerungs-Netzwerk (RIT) nachgeschalteten Schaltpunkt (S1) eingesetzt wurde.

**13.** Verfahren zur zusätzlichen Entzerrung nach einem der vorstehenden Ansprüche, **dadurch gekennzeichnet, dass** die besagte maximale Leistungsschwankung $\Delta$P folgenden Ausdruck annimmt:

$$\Delta P \text{ [dB]} = A_{\text{max dB}} - 20 \log_{10} \rho,$$

wobei

$$20 \log_{10} \rho = 20 \log_{10} A_{\text{max}} \left[ (\alpha - 1)^2 + \left( 2\sqrt{\alpha} \sin\left(\pi \cdot \Delta f \cdot \tau\right) \right)^2 \right]^{1/2}$$

$$\alpha = \frac{A_{\text{max}}}{A_{\text{min}}} \geq 1, \; \Delta f = f - f_o$$

auf der Mittenfrequenz und $A_{\text{max}}$ und $A_{\text{min}}$ die maximale bzw. die minimale Verhältniszahl der Vektoren sind, die die beiden Signale ($V_M$, $V_D$) an den Eingängen der Signalkopplereinheit (SOM) darstellen.

**Revendications**

**1.** Procédé d'égalisation préliminaire de signaux reçus par un récepteur en diversité d'espace comprenant :

- deux récepteurs radio frontaux (RIC-M, RIC-D), appelés principal et en diversité, reliés à deux trajets homonymes parcourus par les signaux reçus ;
- des moyens de régulation de niveau de signal à commande électronique (ATT-M, ATT-D) sur au moins l'un des deux trajets ;
- un déphaseur variable à commande électronique (SFAS) sur l'un ou l'autre trajet ;
- un réseau à retard à commande électronique (RIT) inséré de préférence sur le trajet le plus court ;
- un combineur de signaux (SOM) placé à la fin des deux trajets ;
- une commande numérique (ELAB) pour commander lesdits moyens à commande électronique,

**caractérisé en ce que** ladite commande numérique (ELAB) exécute les étapes consistant à :

a) envoyer des commandes ($A_{Princ}$, $A_{Div}$) aux moyens de régulation de niveau de signal (ATT-M, ATT-D) pour réguler individuellement les niveaux de puissance des signaux principal et en diversité (PRx-M, PRx-D) en aval du combineur (SOM), jusqu'à faire correspondre les niveaux mesurés desdits signaux au niveau dudit combineur (SOM) ;

b) envoyer des commandes ($\Delta\varphi$-COM) audit déphaseur variable (SFAS) pour le déphasage progressif du signal pertinent (PRx-D), introduire des augmentations de phase suffisamment petites pour pouvoir discriminer les points maximum et minimum de la puissance du signal combiné (Vcomb), actualiser les valeurs de puissance maximum et minimum mémorisées du signal combiné (Vcomb) à chaque étape de déphasage et calculer à l'achèvement d'un angle plein la variation de puissance maximum $\Delta P$ du signal combiné (Vcomb) donnée par la différence entre lesdites valeurs actualisées de puissance maximum et minimum, ladite variation de puissance maximum $\Delta P$ dans la bande du signal modulé étant une fonction décroissante de la valeur absolue du retard $\tau$ entre les signaux principal et en diversité au point de combinaison (SOM) ;

c) envoyer une commande ($\Delta\tau$-COM) au réseau à retard (RIT) pour introduire une variation du retard $\Delta\tau$ dont le signe est dans le sens de l'augmentation de la valeur de la fonction $\Delta P$ ;

d) faire une comparaison entre la valeur présente de $\Delta P$ et une valeur constante (K5) prédéfinie comme objectif pour la précision de l'égalisation susmentionnée, répéter les étapes b), c), d) si l'objectif n'est pas atteint et mettre fin à ladite égalisation préliminaire lorsque ladite présente valeur de $\Delta P$ s'avère supérieure ou égale à la valeur prédéfinie (K5).

2. Procédé d'égalisation préliminaire selon la revendication 1, **caractérisé en ce que** à ladite étape c), le signe de la variation $\Delta\tau$ dans le sens de l'augmentation de la valeur $\Delta P$ est déterminé par la différence entre la valeur $\Delta P$ calculée à l'achèvement d'une rotation de 360° en cours et une valeur mémorisée de $\Delta P$ calculée à l'achèvement d'une rotation de 360° précédant immédiatement celle en cours, la valeur initiale mémorisée de la $\Delta P$ étant de préférence nulle et la valeur présente de la $\Delta P$ remplaçant la valeur précédente mémorisée après la comparaison susmentionnée.

3. Procédé d'égalisation préliminaire selon la revendication 2, **caractérisé en ce que** à ladite étape d'exécution c), la valeur absolue de ladite variation $\Delta\tau$ du retard est proportionnelle à la valeur absolue de ladite différence entre la présente valeur de la AP et la $\Delta P$ mémorisée précédemment, ce qui accélère la convergence vers le maximum de la fonction $\Delta P$.

4. Procédé d'égalisation préliminaire selon la revendication 2 ou 3, **caractérisé en ce que** ladite variation $\Delta\tau$ conservera le même signe lorsque ladite différence entre les $\Delta P$ est positive.

5. Procédé d'égalisation préliminaire selon l'une quelconque des revendications précédentes, **caractérisé en ce que** ladite étape a) et ledit déphasage progressif à ladite étape b) sont précédés par un cycle de vérification vérifiant l'absence de propagation irrégulière due à des événements atmosphériques.

6. Procédé d'égalisation préliminaire selon la revendication 5, **caractérisé en ce que** ledit cycle de vérification précédant ladite étape a) comprend les étapes intermédiaires suivantes :

   - calcul du module de la différence entre les niveaux de puissance logarithmiques dudit signal principal (PRx-M) et une valeur de celui-ci mesurée lors d'un intervalle de temps d'acquisition immédiatement antérieur, et comparaison du module avec une première constante prédéfinie (K1) pour vérifier par un test l'absence d'un état formant variations de puissance dans chaque signal reçu par les récepteurs principal et en diversité ;
   - calcul du module de la différence entre le niveau de puissance logarithmique dudit signal en diversité (PRx-D) et une valeur de celui-ci mesurée lors d'un intervalle de temps d'acquisition immédiatement antérieur, et comparaison du module avec la première constante prédéfinie (K1) pour vérifier par un test l'état précédent ;
   - calcul du module de la différence entre les niveaux de puissance logarithmiques desdits signaux principal (PRx-M) et en diversité (PRx-D), et comparaison du module avec une deuxième constante prédéfinie (K2) pour vérifier par un test l'absence d'une forte dissymétrie entre les signaux reçus par les deux récepteurs principal et en diversité ;
   - exécution d'une opération logique ET entre les résultats desdites comparaisons, réalisation de ladite étape a) dans le cas d'un résultat vrai et répétition de toutes les étapes intermédiaires du cycle de vérification, y compris la présente, dans le cas d'un résultat faux.

7. Procédé d'égalisation préliminaire selon l'une quelconque des revendications précédentes, **caractérisé en ce que** ladite étape a) comprend les étapes intermédiaires suivantes :

   a1) blocage du signal principal ou en diversité (PRx-M, PRx-D) reçu par l'antenne placée à une hauteur plus haute sur le treillis (ANT-M, ANT-D), mesure et mise en mémoire du niveau du signal combiné (Vcomb) ;

   a2) blocage du signal non bloqué à l'étape précédente et atténuation du niveau du signal restant jusqu'à faire correspondre la valeur mesurée du signal combiné (Vcomb) avec la valeur mise en mémoire à l'étape a1).

8. Procédé d'égalisation préliminaire selon la revendication 5, **caractérisé en ce que** ledit cycle de vérification précédant ledit déphasage progressif comprend les étapes suivantes :

b1) calcul du module de la différence entre les niveaux de puissance logarithmiques dudit signal principal (PRx-M) et une valeur de celui-ci mesurée lors d'un intervalle de temps d'acquisition immédiatement antérieur, et comparaison du module avec une première constante prédéfinie (K1) pour vérifier par un test l'absence de variations de puissance dans les signaux reçus par les récepteurs principal et en diversité ;

b2) calcul du module de la différence entre les niveaux de puissance logarithmiques dudit signal en diversité (PRx-D) et une valeur de celui-ci mesurée lors d'un intervalle de temps d'acquisition immédiatement antérieur, et comparaison du module avec ladite première constante prédéfinie (K1) pour vérifier par un test l'état précédent ;

b3) calcul du module de la différence entre les niveaux de puissance logarithmiques desdits signaux principal (PRx-M) et en diversité (PRx-D), et comparaison du module avec une deuxième constante prédéfinie (K2) pour vérifier par un test l'absence d'un état de grande asymétrie entre les signaux reçus par les deux récepteurs principal et en diversité ;

b4) calcul des modules de la différence entre les niveaux de puissance logarithmiques ($V_{FLT\,i}$) de différentes parties du spectre de fréquences ($FLT_l$, $FLT_c$, $FLT_h$) du signal modulé, et comparaison de chaque module avec une troisième constante prédéfinie (K3) pour vérifier par un test l'absence d'un état d'évanouissement sélectif en bande, dû à la propagation de signaux radio sur des trajets multiples ;

b5) exécution de l'opération logique ET entre les résultats desdites comparaisons, validation dudit déphasage progressif dans le cas d'un résultat vrai ou relance de l'égalisation depuis le début en cas de résultat faux.

9. Procédé d'égalisation préliminaire selon la revendication 8, **caractérisé en ce que** lesdites différentes parties du spectre de fréquences du signal modulé sont obtenues au moyen de trois filtres passe-bande ($FLT_l$, $FLT_c$, $FLT_h$) couvrant des parties adjacentes du spectre avec une largeur de bande d'au moins un tiers de la bande occupée par ledit spectre.

10. Procédé d'égalisation préliminaire selon la revendication 8 ou 9, **caractérisé en ce que** la tension correspondant auxdits niveaux de puissance logarithmiques ($V_{FLT\,i}$) est mise en mémoire à ladite étape b) et actualisée en concordance avec lesdites valeurs actualisées de la puissance maximum et minimum du signal combiné (Vcomb).

11. Procédé d'égalisation préliminaire selon la revendication 8, **caractérisé en ce que** à l'étape c), avant l'introduction d'une dite étape de variation $\Delta\tau$ du retard, un test est effectué pour vérifier si ledit module de la différence entre les valeurs de puissance logarithmiques ($V_{FLT\,i}$) prises aux deux extrémités du spectre mises en mémoire correspondant à la valeur minimum du signal combiné est inférieur à une quatrième constante prédéfinie (K4) dont le dépassement indique le manque de symétrie en contrephase des signaux combinés ($V_M$, $V_D$) ; en outre, une fausse valeur logique au test en présence d'une valeur positive de ladite différence entre les valeurs de $\Delta P$ dénote un excès d'égalisation et implique une inversion de signe de la variation $\Delta\tau$ du retard.

12. Procédé d'égalisation préliminaire selon l'une quelconque des revendications précédentes, **caractérisé en ce que** à l'étape c), avant d'introduire une dite étape de variation $\Delta\tau$ du retard correspondant à une augmentation, un test est effectué pour déterminer si le retard disponible total du réseau à retard (RIT) a été utilisé, en cas de réponse affirmative relancer la procédure d'égalisation après avoir inséré une longueur de câble dans un point de raccordement (S1) en aval du réseau à retard (RIT).

13. Procédé d'égalisation préliminaire selon l'une quelconque des revendications précédentes, **caractérisé en ce que** ladite variation de puissance maximum $\Delta P$ a l'expression suivante :

$$\Delta P \text{ [dB]} = A_{max\,dB} - 20 \log_{10} \rho,$$

où

$$20 \log_{10} \rho = 20 \log_{10} A_{\max} \left[ \left( \alpha - 1 \right)^2 + \left( 2\sqrt{\alpha} \sin \left( \pi \cdot \Delta f \cdot \tau \right) \right)^2 \right]^{1/2}$$

$$\alpha = \frac{A_{\max}}{A_{\min}} \geq 1 \ , \ \Delta f = f - f_o$$

à la fréquence centrale, et $A_{\max}$ et $A_{\min}$ étant respectivement le module maximum et minimum des vecteurs représentant les deux signaux ($V_M$, $V_D$) aux entrées du combineur (SOM).

FIG.1

EP 1 176 736 B1

EP 1 176 736 B1

FIG. 2

$$\beta = 2\pi f_o \tau$$

FIG.3

FIG.4

Setting of initial values of variables controlled by blocks: ATT-M, ATT-D, SFAS, and RIT and resetting of internal records and meters of the ELAB block. — F0

(B)

F1 — Reading of RF received fields PRx-M and PRx-D

F2

$\left| PRx_{M/D}(t) - PRx_{M/D}(t-1) \right| < K1$

and $\left| PRx_M(t) - PRx_D(t) \right| < K2$

yes / no

F3

Is the Div antenna higher than the Main antenna?

yes / no

(A)

Operations on the Main Path are specular versus those on the Div branch

F4
- Squelch of Div Path
- Reading of Main level at Vcomb point (PRx-M)

F5
- Squelch of Main Path
- Trimming Adiv in order that Div level is equal to PRx-M

(A)

FIG.5

22

(A)

Rotation = 0
Resetting of records for phase F8

(C)

Rotation = Rotation + 1 — F6

F7

$$\left| PRx_{M/D}(t) - PRx_{M/D}(t\text{-}1) \right| < K1$$

$$\text{and } \left| PRx_M(t) - PRx_D(t) \right| < K2 \text{ and }$$

$$\left| V_{FLT\,i}(t) - V_{FLT\,j}(t) \right| < K3$$

no          yes

(B)

F8

- Waiting time for system settling;
- $PRx_{M/D}$ and Vcomb readings;
- Store $\left( V_{comb}^{min} \text{ and } V_{comb}^{max} \right)$ ;
- coinciding with
$\left( V_{comb}^{min} \text{ and } V_{comb}^{max} \right)$ also store $V_{FLT\,i}$

F9

$$\varphi(t+1) = \varphi(t) + \Delta\varphi(t+1)$$

F10

yes          Have you done a 360° rotation?          no

F11

no          rotation = 1?          yes

(D)

F12

Increase τ

$$\left( V_{comb}^{min}, V_{comb}^{max} \right)^{new} \Rightarrow \left( V_{comb}^{min}, V_{comb}^{max} \right)^{old}$$

(C)

FIG.6

**(D)** ↓

$$\Delta P = V_{comb}^{max} - V_{comb}^{min}$$ F13

F14

$\Delta P$ new rotation $-$ $\Delta P$ old rotation $> 0$ ?

yes → no

F15

$\Delta P$ new $\rightarrow$ $\Delta P$ old

F19

$\Delta P$ new $\rightarrow$ $\Delta P$ old

rotation $\leq 2$

yes → no

F17

The operator failed in estimating which is the higher antenna

**(B)**

F16

F18

Reduce $\tau$

**(C)**

F20

$|\Delta V_{FLT\,l\text{-}h}| < K4$

no → yes

F21

Reduce $\tau$

**(C)**

F22

$\Delta P$ new rotation $\geq K5$

no → yes

F26

Has the maximum available $\tau$ been inserted ?

yes → no

F23

End of equalization procedure

F27

Insert external cable **S1**

**(B)**

F28

Increase $\tau$

**(C)**

F24

Do you want to repeat equalization ?

no → yes

F25

Store data

**(B)**

FIG.7